Europäisches Patentamt

European Patent Office

Office européen des brevets

(11) Publication number: **0 294 924 B1**

# EUROPEAN PATENT SPECIFICATION

(45) Date of publication of patent specification: **16.09.92**  (51) Int. Cl.⁵: **G01F 1/60**

(21) Application number: **88303312.8**

(22) Date of filing: **13.04.88**

(54) **Method and apparatus for compensating for a DC offset voltage in an electromagnetic flow meter.**

(30) Priority: **13.04.87 JP 91654/87**

(43) Date of publication of application:
**14.12.88 Bulletin 88/50**

(45) Publication of the grant of the patent:
**16.09.92 Bulletin 92/38**

(84) Designated Contracting States:
**CH DE FR GB LI**

(56) References cited:
**DE-A- 3 537 752**
**GB-A- 2 084 740**
**US-A- 4 157 035**
**US-A- 4 210 022**

(73) Proprietor: **Aichi Tokei Denki Co., Ltd.**
**2-70, Chitose 1-chome Atsuta-ku**
**Nagoya-shi Aichi-Ken 456-91(JP)**

(72) Inventor: **Mochizuki, Tutomu**
**35-6, Aza Tenma Myodaijicho**
**Okazaki-shi(JP)**

(74) Representative: **Blanco White, Henry Nicholas**
**et al**
**ABEL & IMRAY Northumberland House**
**303-306 High Holborn**
**London WC1V 7LH(GB)**

EP 0 294 924 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates electromagnetic flowmeters, and especially to a method and apparatus for compensating for a DC offset voltage generated in an amplifying circuit in an electro-magnetic flowmeter without the output's being unduly sensitive to AC noise generated between electrodes of the electromagnetic flowmeter.

US-A-4 157 035 discloses an inductive flowmeter in which an alternating magnetic field is imposed across a pipe through which, in use, an electrically conductive fluid flows, and a correspondingly alternating electric voltage appears at a pair of electrodes provided on the pipe. The opposite voltages are sampled and stored, and a difference between them is taken as an output value. The output is disabled if excessive AC noise is detected.

US-A-4 210 022 discloses a similar flowmeter in which periods of magnetic excitation alternate with periods of no excitation. During a period of no excitation the output from an amplifier is compensated to zero by an adjusting circuit which then maintains a constant compensation voltage during the subsequent excitation and sampling period.

GB-A-2 084 740, on which the preamble to claim 1 is based, discloses a flowmeter in which the signal voltage is compensated to zero during the latter part of a period of excitation, and the compensation voltage obtained is maintained during the subsequent sampling period with opposite excitation, in order to compensate for a slowly-varying DC interference voltage. The present Applicants estimate that "zero" in practice means a final value in the range of from $10^{-6}$ to $10^{-30}$ of the value at the beginning of the compensation period.

However, an actual interference voltage cannot be regarded as a simple DC voltage and has a large variation which cannot be disregarded even in half period of excitation.

Specifically, the following problems arise:

(1) Electrochemical noises having a wide frequency range are generated across the electrodes and the magnitude and frequency components of the noises vary depending on the kind and amount of ions in the fluid, and the materials and surface conditions of the electrodes.

(2) Pulse-like noises having widths within a range of from several msec to several tens of msec may be generated in a case of a slurry fluid.

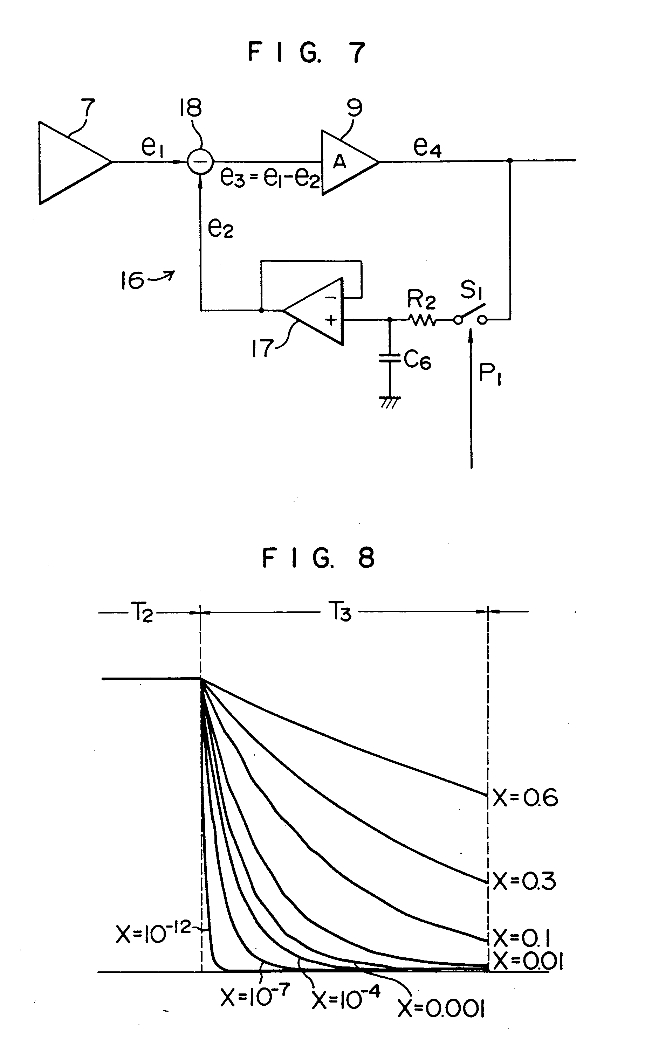

(3) Random noises which rapidly increase when the flow rate in the measurement tube rises to 3 or 4 m/sec or more (hereinafter referred to as "a high velocity fluid noise") which may be significant trouble noises. Fig. 6 shows an example of actually measured data of the relationship between the frequency and magnitude of such a high velocity fluid noise. As seen in Fig. 6, the high velocity fluid noise is a gathering of numbers of noises within a wide frequency range and has particularly large magnitudes in the vicinity of the frequency of the excitation current, that is to say, in the range from about one to several tens of Hz.

(4) On the other hand, there is a tendency to make the excitation current small to reduce the power consumption in the electromagnetic flowmeter, and the signal voltage can be as low as about 10 $\mu$V per 1 m/sec of flow rate. When such a small voltage signal is used, the above-mentioned AC noises superimposed on the flow signal cannot be disregarded.

In the previously-proposed method in which a signal voltage is compensated to be zero in a compensation period, there have been problems in that large variations are caused in the amplified output when such an AC noise is superimposed on a flow signal, and particularly in that very large variations are caused when a pulse-like noise is superimposed on a flow signal in a compensating period.

Further, in the previously-proposed flowmeter a differential amplifier in the input stage is directly coupled with the electrodes. Accordingly, it is necessary to reduce the amplification degree of the differential amplifier to about 1 to 10 so that the differential amplifier will not be saturated by a trouble DC voltage. Accordingly, there has been a problem in that the amplification degree of the input stage is not sufficient in a lower power consumption electromagnetic flowmeter in which very small signals not larger than 10 $\mu$V per 1 m/sec of flow rate are used.

It is an object of the present invention to provide a method and an apparatus, in an electromagnetic flowmeter, in which variations are hardly caused in an output of an amplifying circuit even if large noises varying at random are superimposed on an effective signal, in which a differential amplifier having a large amplification degree can be used so as to be particularly effective with a low power consumption type electromagnetic flowmeter, and in which a DC offset voltage generated in the differential amplifier and an AC amplifier in the next stage can be at least partially compensated.

The invention provides a method of compensating for DC offset voltages in an electromagnetic flowmeter, comprising generating a DC magnetic field having a periodically reversed polarity, sampling and

2

storing a signal voltage produced across a pair of electrodes provided on a tube through which, in use, an electrically conductive fluid flows across the magnetic field, in each of a pair of sampling periods when the magnetic field takes a positive polarity and a negative polarity, respectively, and forming a difference between the sampling values as an output voltage, sampling the signal voltage in a compensation period following each said sampling period to produce a compensation voltage, storing the compensation voltage from one compensation period to the next, and superimposing the compensation voltage onto the signal voltage prior to sampling it, in order to compensate at least partially for DC offset voltages, characterised in that the step of sampling the compensated signal voltage is carried out with a time constant such that over the length of the compensation period the compensated signal voltage is reduced to a value in the range of from 10% to 60% of its value at the beginning of the compensation period.

The invention also provides an electromagnetic flowmeter, comprising means for generating a DC magnetic field having a periodically reversed polarity, a pair of electrodes that are arranged to be provided on a tube through which, in use, an electrically conductive fluid flows across the magnetic field, means arranged in use to sample and store a signal voltage produced across the electrodes in each of a pair of sampling periods when the magnetic field takes a positive polarity and a negative polarity, respectively, and to form a difference between the sampling values as an output voltage, a closed loop adjusting circuit arranged in use to sample the signal voltage in a compensation period following each said sampling period to produce a compensation voltage, to store the compensation voltage from one compensation period to the next, and to superimpose the compensation voltage onto the signal voltage prior to sampling it, in order to compensate at least partially for DC offset voltages, characterised in that the adjusting circuit carries out the sampling of the signal voltage with a time constant such that over a compensation period of predetermined length the compensated signal voltage is reduced to a value in the range of from 10% to 60% of its value at the beginning of the compensation period.

Methods and apparatus in accordance with the present invention will now be described by way of example only with reference to the accompanying drawings, in which:

Fig. 1 is a block diagram showing the arrangement of one form of the apparatus;

Fig. 2 is a signal waveform diagram showing operating signals at various operating points in the apparatus shown in Fig. 1;

Fig. 3 is a signal waveform diagram corresponding to part of Fig. 2, to a larger scale than Fig. 2;

Fig. 4 is a signal waveform diagram corresponding to part of Fig. 2 and showing a case where AC noises are superimposed on the signals;

Fig. 5 is a signal waveform diagram corresponding to part of Fig. 4 showing a point in time when AC noises are superimposed on the signals and before and after that time, to a larger scale than Fig. 4;

Fig. 6 is a graph showing frequency components of high velocity fluid noises generated at electrodes;

Fig. 7 is a block diagram of a second form of apparatus, corresponding to part of Fig. 1; and

Figs. 8 to 10 are graphs for explaining the operation and effects of the apparatus shown in Figs. 1 and 7.

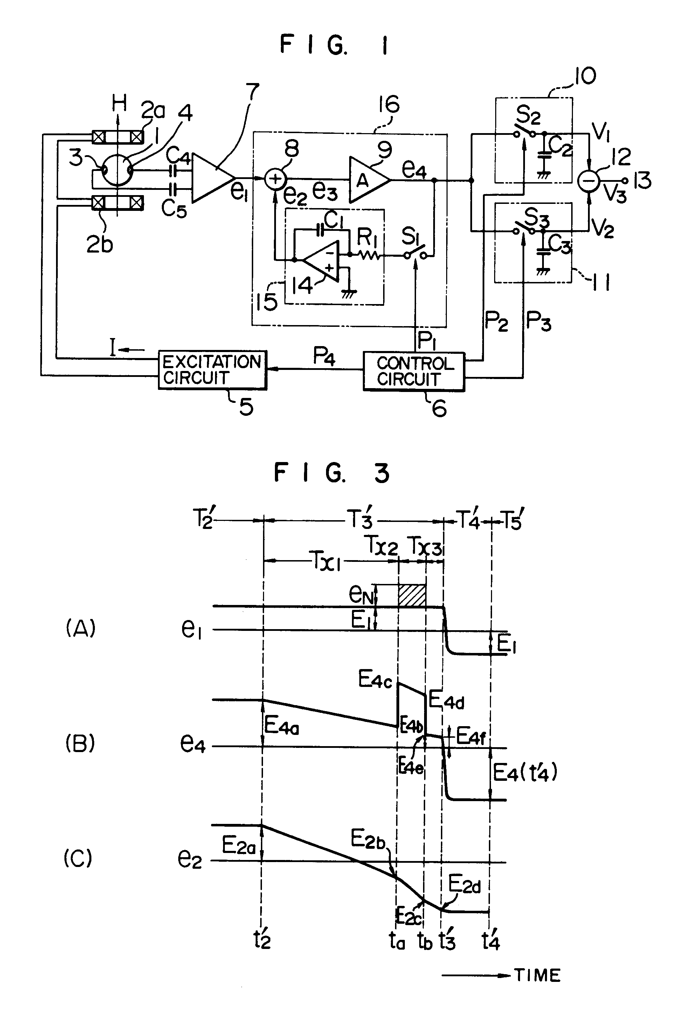

Referring to the drawings, and initially to Fig. 1, in one form of apparatus according to the invention a magnetic field H is generated by two excitation coils 2a and 2b perpendicularly to a central axis of a tube 1 having an insulated inner surface. A pair of electrodes 3 and 4 are provided inside the tube 1 so that an induction voltage proportional to the flow velocity of an electrically conductive fluid across the magnetic field can be taken out from those electrodes 3 and 4.

An excitation circuit 5 is arranged to supply an excitation current to the excitation coils 2a and 2b in synchronism with a control signal P4 sent from a control circuit 6 to the excitation circuit 5.

The electrodes 3 and 4 are connected to the inputs of a differential amplifier 7 through capacitors C5 and C4, respectively, so that a trouble voltage and a slow change thereof are blocked by those capacitors C4 and C5 and only an effective signal and high frequency noises are supplied to the differential amplifier 7.

The output of the differential amplifier 7 is connected to one input of an adding circuit 8 the output of which is in turn connected to the input of an amplifier 9 having an amplification degree of A.

Two sampling and holding circuits 10 and 11 are connected to the output of the amplifier 9 in parallel with each other. For the sake of simplification, the sampling and holding circuit 10 is constituted by a switch S2, driven by a control signal P2 from the control circuit 6, and a capacitor C2. If the switch S2 is turned on, the capacitor C2 is charged to a voltage equal to the output voltage of the amplifier 9.

When the switch S2 is turned off, the sampling value stored in the capacitor C2 is preserved and is applied as a voltage V1 to the output terminal of the sampling and holding circuit 10 until the switch S2 is next turned on.

Similarly to the sampling and holding circuit 10, the sampling and holding circuit 11 is constituted by a switch S3, driven by a control signal P3 from the control circuit 6, and a capacitor C3. When the switch S3

3

EP 0 294 924 B1

is in its ON-state, the capacitor C3 is charged to a voltage equal to an output voltage of the amplifier 9.

When the switch S3 is turned off, the sampling value stored in the capacitor C3 is preserved and applied as a voltage V2 to the output terminal of the sampling and holding circuit 11 until the switch S3 is next turned on.

An impedance converter (not shown) may be connected in the after stage of each of the sampling and holding circuits 10 and 11 in order to prevent the capacitor C2 or C3 from discharging after the respective switch S2 or S3 is turned off.

The respective outputs of the sampling and holding circuits 10 and 11 are connected to the two inputs of a subtracting circuit 12 so that a signal V3 corresponding to the difference between the sampling values V1 and V2 respectively stored in the sampling and holding circuits 10 and 11 appears at the output 13 of the subtracting circuit 12. The output signal V3 forms a measurement signal representing the flow velocity in the tube 1.

An integrating circuit 15 constituted by a resistor R1, a capacitor C1 and an operational amplifier 14 is connected to the output of the control circuit 6 through a switch S1 driven by a control signal P1 from the control circuit 6. The output of the integrating circuit 15 is connected to the second input of the adding circuit 8.

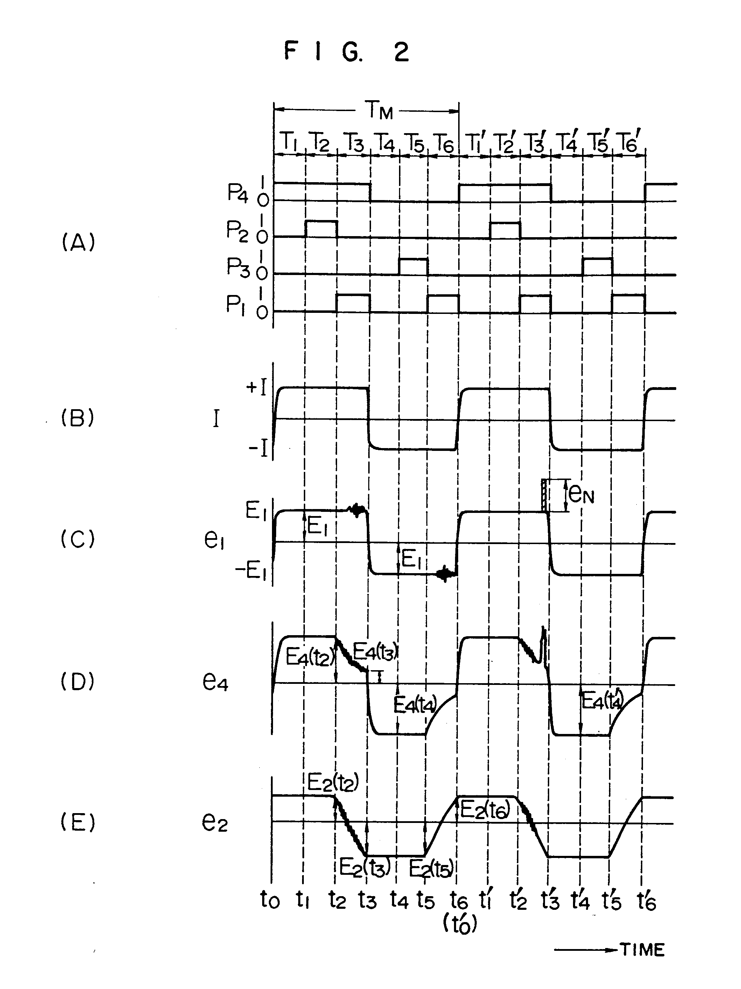

Waveforms of the operating signals at various operation points in Fig. 1 are shown in the diagrams P4, P2, P3, P1, I, $e_1$, $e_4$, $e_2$, of Fig. 2.

In Fig. 2(A), the period TM indicates the whole measuring cycle which is equal to the period of the alternating magnetic field generated by the excitation coils 2a and 2b and which is divided into six time portions $T_1$, $T_2$, $T_3$, $T_4$, $T_5$ and $T_6$ which start at the points of time $t_0$, $t_1$, $t_2$, $t_3$, $t_4$ and $t_5$ respectively.

The time portion $T_6$ terminates at the point in time t6 which coincides with the point in time $t_0'$ at which the next measuring cycle starts. In Fig. 2(A), the succeeding measuring cycle having the time portions $T_1'$, $T_2'$, $T_3'$, $T_4'$, $T_5'$ and $T_6'$ which terminate at the points in time $t_1'$, $t_2'$, $t_3'$, $t_4'$, $t_5'$ and $t_6'$, respectively, is also shown.

In Fig. 2(A), the waveforms of the control signals P4, P3, P2 and P1 generated from the control circuit 6 are illustrated. Each of the control signals P4, P3, P2, and P1 has a changeable signal level which is either "1" or "0".

When the control signals P1, P2, and P3 are applied to the switches S1, S2, and S3, respectively, the signal level "1" indicates the ON-state of the switch and the signal level "0" indicates the OFF-state of the switch.

During the time portions $T_1$, $T_2$ and $T_3$, the control signal P4 is applied to the excitation circuit 5 with its signal level maintained at "1", and a DC excitation current I flows through the excitation coils 2a and 2b in the positive direction as shown in Fig. 2(B). On the other hand, during the time portions $T_4$, $T_5$ and $T_6$ the control signal P4 is applied to the excitation circuit 5 with its signal level maintained at "0", and the DC excitation current I flows through the excitation coils 2a and 2b in the negative direction. The magnetic field H changes with time in the same way as the excitation current I. The switch S2 of the sampling and holding circuit 10 is switched ON by the control signal P2 during the time portion $T_2$ in each measuring cycle. Accordingly, the sampling and holding circuit 10 samples the output voltage of the amplifier 9 about the middle of the period for which the magnetic field H is positive, and stores the sampling value.

The switch S3 of the sampling and holding circuit 11 is switched ON by the control signal P3 during the time portion $T_5$ in each measuring cycle. Accordingly, the sampling and holding circuit 11 samples the output voltage of the amplifier 9 about the middle of the period for which the magnetic field H is negative, and stores the sampling value.

When the switch S1 is turned on, a closed loop adjusting circuit 16 is formed from the output of the amplifier 9 to the input of the same amplifier 9 through the integrating circuit 15 and the adding circuit 8. In the closed loop adjusting circuit 16, the integrating circuit 15 integrates the output voltage $e_4$ of the amplifier 9 with a time constant which is equal to the product C1 x R1 between the capacitance C1 and the resistance R1 of the capacitor C1 and the resistor R1 respectively during a period from the point in time $t_2$ or $t_5$ when the switch S1 is turned on to the point in time $t_3$ or $t_6$ when the switch S1 is turned off.

The output voltage $e_2$ of the integrating circuit 15 changes from a positive value $E_2(t_2)$ to a negative value $E_2(t_3)$, as shown in Fig. 2(E), to produce a compensation voltage $E_2(t_3)$.

The compensation voltage $E_2(t_3)$ has the opposite polarity to the output voltage $e_1$ of the differential amplifier 7 and has a value which is proportional to the output voltage $e_1$ with a predetermined ratio smaller than 1.

As the output voltage $e_2$ of the integrating circuit 15 changes, the output voltage $e_4$ of the amplifier 9 decreases exponentially until it has a value $E_4(t_3)$ at the point in time $t_3$ which is proportional, with a predetermined ratio, to the value $E_4(t_2)$ at the point in time $t_2$. This state is illustrated in Fig. 2(D).

4

After the switch S1 is turned off, the integrating circuit 15 is in a holding state and stores the compensation voltage $E_2(t_3)$ through the time portions $T_4$ and $T_5$.

That compensation voltage is added in the adding circuit 8 to the signal voltage $e_1$ which is successively supplied to the adding circuit 8 every time the compensation voltage is stored.

After the switch S1 is turned off, the output voltage $e_1$ of the differential amplifier 7 takes a value $E_1$ of negative polarity in the time portion $T_4$ when the polarity of the excitation current becomes negative.

Next, in the time portion $T_6$ when the switch S1 is turned on again, the output voltage $e_4$ of the amplifier 9 decreases exponentially in the same manner as in the time portion $T_4$, and the integrating circuit 15 produces a compensation voltage $E_2(t_6)$ of opposite polarity to the value $E_2(t_3)$ stored at the point in time $t_3$.

Thus, the time portions $T_1$ to $T_6$ form one period TM of the compensation cycle.

The foregoing operation of the closed loop adjusting circuit 16 will now be described in more detail by the use of mathematical expressions:

When the switch S1 is turned on, the integrating circuit 15 integrates the output voltage $e_4$ of the amplifier 9 with the time constant C1 x R1, and the output voltage $e_2$ of the integrating circuit 15, which was $E_2(t_2)$ of positive polarity at the point in time $t_2$, becomes $E_2(t_3)$ of negative polarity at the point in time $t_3$. This relationship is expressed by the equation (1) as follows:

$$E_2(t_3) = E_2(t_2) \cdot X - E_1 \cdot (1 - X) \qquad (1)$$

in which:

$$X = e^{-(A/C1\ R1).T}3 \qquad (2)$$

The output voltage $e_4$ of the amplifier 9 is obtained by amplifying, with the amplification degree A thereof, the addition value $e_3$ obtained in the adding circuit 8 by adding the output voltage $e_1$ of the differential amplifier 7 and the output voltage $e_2$ of the integrating circuit 15, and thus:

$$e_4 = A \cdot e_3$$
$$= A \cdot (e_1 + e_2) \qquad (3)$$

By substituting from equation (1) for the value $e_2$ in equation (3), the output voltage $E_4(t_3)$ of the amplifier 9 at the point in time $t_3$ can be obtained as follows:

$$E_4(t_3) = A \cdot \{E_1 + E_2(t_2) \cdot X - E_1 \cdot (1 - X)\}$$
$$= A \cdot \{E_2(t_2) + E_1\} \cdot X$$

From equation (3):

$$E_4(t_2) = A \cdot \{E_1 + E_2(t_2)\}$$

Therefore:

$$E_4(t_3) = E_4(t_2) \cdot X \qquad (4)$$

That is to say, the value $E_4(t_3)$ of the output voltage $e_4$ of the amplifier 9 at the point in time $t_3$ is a product of the value $E_4(t_2)$ of the output voltage $e_4$ at the point in time $t_2$ and the value X.

Next, if the polarity of the excitation current I changes from positive to negative in the time portion $T_4$, the output voltage e of the differential amplifier 7 changes to a value $-E_1$.

The value $E_4(t_4)$ of the output voltage $e_4$ of the amplifier 9 at the point in time $t_4$ when the excitation current has reached a steady state is expressed as:

$$E_4(t_4) = A \cdot (e_1 + e_2) \qquad (5)$$

At the point in time $t_4$, $e_1 = -E_1$, and the compensation voltage $e_2$ has the value $E_2(t_3)$ that was stored at the point in time $t_3$. Accordingly, by substituting these values for $e_1$ and $e_2$ in equation (5), the value $E_4(t_4)$ is expressed by:

$$E_4(t_4) = A \cdot \{-E_1 + E_2(t_2) \cdot X - E_1 \cdot (1 - X)\}$$

$= -2 \cdot A \cdot E_1 + A \cdot \{E_1 + E_2(t_2)\} \cdot X \qquad (6)$

Since $A \cdot \{E_1 + E_2(t_2)\} = E_4(t_2)$,

$E_4(t_4) = -2 \cdot A \cdot E_1 + E_4(t_2) \cdot X \qquad (7)$

In the steady state, the absolute values of the positive and negative values of the output of the adding circuit 8 is equal to each other, that is, $E_4(t_2) = -E_4(t_4)$. Accordingly:

$$E_4(t_4) = -2 \cdot A \cdot E_1 - E_4(t_4) \cdot X$$
$$E_4(t_4) = \frac{-2A}{(1 + X)} \cdot E_1 \qquad \qquad \ldots (8)$$

From the equation (8), the amplification degree G of the closed loop adjusting circuit 16 having outputs of positive and negative polarities is expressed in a general form by:

$G = e_4 / e_1 = (2 \cdot A) / (1 + X) \qquad (9)$

From equation (4):

$X = \{E_4(t_3)\} / \{E_4(t_2)\} \qquad (10)$

Accordingly, X can be advantageously used as a coefficient representing the degree of compensation by the closed loop adjusting circuit 16. Fig. 8 shows the time variation of the output voltage $e_4$ of the amplifier 9 in the time portion $T_3$ with X as a parameter.

In the method described in GB-A-2 084 740, the output voltage $e_4$ of the amplifier 9 is doubled by adding the stored value in the time portion $T_3$ to the stored value in the time portion $T_5$. Accordingly, it is necessary to make compensation so as to bring the output value in the time portion $T_3$ towards zero as quickly as possible. To that end, referring to Fig. 8, X takes a very small value of the order of $10^{-6}$ to $10^{-30}$.

On the contrary, according to the present invention, the optimum value of X is 0.6 to 0.1 (60% to 10% compensation).

In order to explain the effect caused by the selection of X to be a value within a range of from 0.1 to 0.6, assume the case where a single pulse of noise is superimposed just before the end of the time portion $T_3'$, which is a compensation period (see Fig. 2).

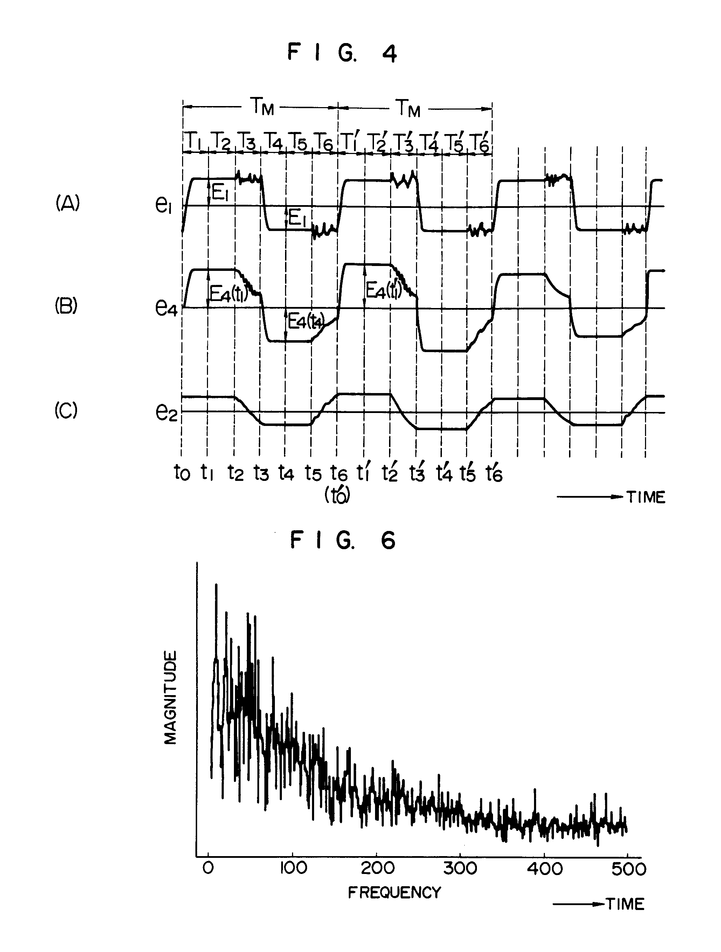

Fig. 3 shows an enlarged part of Fig. 2 before and after the time portion $T_3'$ in the diagram (A) of Fig. 2.

The diagram (A) of Fig. 3 shows the output voltage $e_1$ of the differential amplifier 7 corresponding to that shown in the diagram (C) of Fig. 2, and illustrates the case where a pulse-like noise is superimposed on the output voltage $e_1$ of the differential amplifier 7. That is, a noise having a pulse width of $T_{x2}$ is superimposed on the output voltage $e_1$ of the differential amplifier 7 beginning at the point in time $t_a$, a period of time $T_{x1}$ after the point in time $t_2'$, and the noise disappears at the point in time $t_b$, a period of time $T_{x3}$ before the point in time $t_3'$. Assume now that the peak value $e_N$ of the pulse of noise is equal to the output voltage $E_1$ of positive polarity, and that the values of the output voltage $e_4$ of the amplifier 9 and the output voltage $e_2$ of the integrating circuit 15 at the point in time $t_2'$ at which the switch S1 is turned on are $E_{4a}$ and $E_{2a}$ respectively. After the switch S1 is turned on, the integrating circuit 15 integrates the output voltage $e_4$ of the amplifier 9 with the time constant C1 x R1. The value $E_{2b}$ of the output voltage $e_2$ of the integrating circuit 15 at the point in time $t_a$ is expressed by the following equation (11) similarly to equation (1):

$E_{2b} = E_{2a} \cdot X_1 - E_1 \cdot (1 - X_1) \qquad (11)$

in which:

$X_1 = e^{-(A/C1 \, R1) \, T_{x1}} \qquad (12)$

Equation (12) is the same as equation (2) except that the integration time is changed from $T_3$ to $T_{x1}$.

At the point in time $t_a$ where the compensation voltage takes the value $E_{2b}$, the value $E_{4b}$ of the output voltage $e_4$ of the amplifier 9 is expressed by:

$$E_{4b} = A^{\bullet}(E_1 + E_{2b}).$$

Though the output voltage $e_1$ of the differential amplifier 7 is increased at this point in time $t_a$ by a value $e_N$ corresponding to the peak value $e_N$ of the noise, the output voltage $e_2$ of the integrating circuit 15 does not instantaneously change but takes the value $E_{2b}$ as it is. Accordingly, the value $E_{4c}$ of the output voltage $e_4$ of the amplifier 9 after the noise has been superimposed thereon is increased from the value $E_{4b}$ by the product of the peak value $e_N$ of the noise and the amplification degree A, that is, $A^{\bullet}e_N$. Accordingly:

$$\begin{aligned}E_{4c} &= E_{4b} + A^{\bullet}e_N \\ &= A^{\bullet}(E_1 + E_{2b} + e_N) \quad (13)\end{aligned}$$

The integrating circuit 15 integrates the output voltage of the amplifier 9 including the noise at the time constant C1 x R1 in the time portion $T_{x2}$ in which the noise is superimposed on the output voltage of the amplifier 9, and the value $E_{2c}$ of the output voltage $e_2$ of the integrating circuit 15 at the point in time $t_b$ becomes:

$$E_{2c} = E_{2b}^{\bullet}X_2 - (E_1 + e_N)^{\bullet}(1 - X_2) \quad (14)$$

in which:

$$X_2 = e^{-(A/C1\ R1)\,T_{x2}} \quad (15)$$

Equation (15) is the same as equation (2) except that the integration time is changed from $T_3$ to $T_{x2}$.

At the point in time $t_b$ where the compensation voltage takes the value $E_{2c}$, the value $E_{4d}$ of the output voltage $e_4$ of the amplifier 9 is a product of the amplification degree A of the amplifier 9 and the sum ($E_1 + e_N + E_{2c}$) of the compensation voltage $E_{2c}$ and the value produced by the differential amplifier 7. Accordingly, the value $E_{4d}$ is expressed by:

$$E_{4d} = A^{\bullet}(E_1 + e_N + E_{2c}) \quad (16)$$

Even if the noise disappears at this point in time $t_b$, the output voltage $e_2$ of the integrating circuit 15 does not instantaneously change but takes the value $E_{2c}$ as it is. Accordingly, the value $E_{4e}$ of the output voltage $e_4$ of the amplifier 9 after the noise has disappeared is decreased from the value $E_{4d}$ by the decrease of noise, as expressed by:

$$E_{4d} = A^{\bullet}(E_1 + E_{2c}) \quad (17)$$

The integrating circuit 15 integrates the output voltage of the amplifier 9 corresponding to only the effective signal without any noise in the time portion $t_{x3}$, and the value $E_{2d}$ of the output voltage $e_2$ of the integrating circuit 15 at the point in time $t_3{}'$ becomes:

$$E_{2d} = E_{2c}^{\bullet}X_3 - E_1^{\bullet}(1 - X_3) \quad (18)$$

in which:

$$X_3 = e{-(A/C1^{\bullet}R1)^{\bullet}T_{x3}} \quad (19)$$

When the compensation voltage has become $E_{2d}$ at the point in time $t_3{}'$, the value $E_{4f}$ of the output voltage $e_4$ of the amplifier 9 at this point in time becomes:

$$E_{4f} = A^{\bullet}(E_1 + E_{2d}) \quad (20)$$

When the polarity of the excitation current I is reversed in the time portion $T_4{}'$ after the switch S1 has been turned off at the point in time $t_3{}'$, the output voltage $e_1$ of the differential amplifier 7 is also reversed in

7

polarity so as to be $-E_1$.

On the other hand, since the output voltage $e_2$ of the integrating circuit 15 is maintained to be the compensation voltage $E_{2d}$, the value $E_4(t_4')$ of the output voltage $e_4$ of the amplifier 9 at the point in time $t_4'$ is expressed by:

$$E_4(t_4') = A \cdot (-E_1 + E_{2d}) \qquad (21)$$

This value $E_4(t_4')$ is the output voltage corresponding to the last half period of the excitation, and has an error in comparison with the value $E_4(t_4)$ that was obtained in the case where there was no noise superimposed.

Assuming that K represents the ratio of the value $E_4(t_4')$ to the value $E_4(t_4)$, that is to say:

$$K = E_4(t_4') / E_4(t_4) \qquad (22)$$

the value K may be utilised to express the degree of influence of a single pulse noise. The value K represents the magnification of the output voltage of the amplifier 9 in the next half period in which a noise is superimposed on the output voltage relative to the correct output voltage of the amplifier 9.

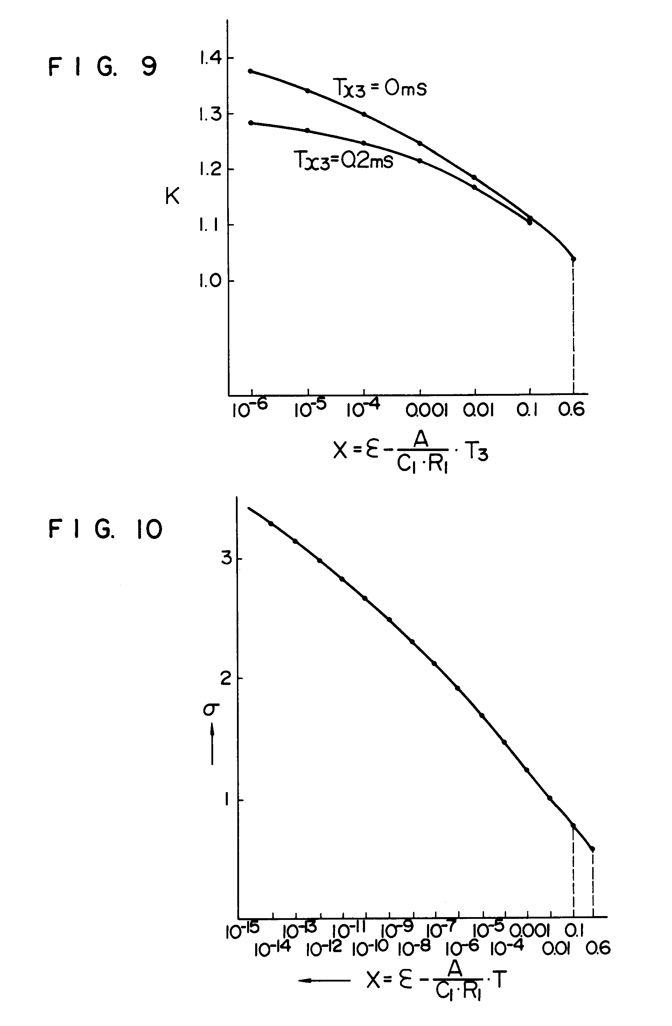

In Fig. 9, the change of influence of a single pulse noise depending on the value of X is expressed by using the value K. Fig. 9 is a result of simulation for values of X in the range of from 0.6 to $10^{-6}$ by using equations (11) to (22). The simulation was effected under the conditions that the compensation time interval $T_3'$ which is the length of time for which the switch S1 was turned on was selected to be 10 msec, the time width of the single pulse noise $t_{x2}$ was made to be 1 msec, and the peak value $e_N$ was assumed to be equal to the value $E_1$ of the output voltage of the differential amplifier 7. Further, two kinds of time periods when a noise was superimposed were assumed as follows.

(1) $T_{x3} = 0$ msec, $T_{x1} = 9$ msec

(2) $T_{x3} = 0.2$ msec, $T_{x1} = 8.8$ msec

In Fig. 9, under both the two conditions that $T_{x3} = 0$ msec and Tx3 = 0.2 msec, as the value of X decreases the noise influence degree K increases. In particular, if a noise is superimposed in the condition of $T_{x3} = 0$, that is to say, just at the end of the time portion $T_3'$, the tendency of K to increase as X decreases is large. According to the present invention, X is selected to have a value in the range of from 0.1 to 0.6, so that the noise influence degree K is suppressed to be about 1.1 or less. On the contrary, in the case where it is intended that compensation is to be effected to make the output value completely zero in the time portion $T_3'$ which is a compensation period as in the above-mentioned GB-A-2 084 740, it is necessary to select the value of X so as not to be larger than $10^{-4}$ as seen in Fig. 8, and therefore the influence of the noise makes the output 1.3 or 1.4 times the correct value, as seen in Fig. 9.

If X is selected to be not larger than about $10^{-2}$, when a noise is superimposed at the final period of the time portion $T_3'$ the output voltage $e_4$ of the amplifier 9 is compensated so as to be zero in the state wherein the output voltage includes the noise. Accordingly, the compensation voltage $E_{2d}$ includes an error corresponding to the noise. In the time portions $T_4$ and $T_5$ after the excitation current has been reversed in polarity, therefore, the output voltage $e_4$ of the amplifier 9 has a large error, as shown in Fig. 9, because it is compensated by the compensation voltage $E_{2d}$ including an error. Further, though the amplification degree of the closed loop adjusting circuit 16 represented by the equation (6) changes as the value of X changes, this change in the amplification degree of the closed loop adjusting circuit 16 has been corrected in Fig. 9. Accordingly, in Fig. 9, the value along the ordinate indicates the variation of K relative to the change in X under the condition of fixed amplification degree.

Next, a case where general random noises are superimposed on the flow signal will be discussed.

Figs. 4(A) to (C) show output signals at various portions in Fig. 1 similarly to Fig. 2. In Fig. 4, however, a case where random noises are superimposed in each of the time portions $T_3$, $T_6$, $T_3'$, and $T_6'$ in which the switch S1 is turned on is illustrated.

Though such noises may be superimposed, generally, in all the periods of time portions, the noises superimposed in the time portions $T_3$, $T_6$, $T_3'$, and $T_6'$ are shown in Fig. 4 and noises superimposed in the other time portions are omitted, because it is the degree of influence on the compensation operation of noise superimposed in a compensation period ($T_3$ or $T_6$) that is being discussed.

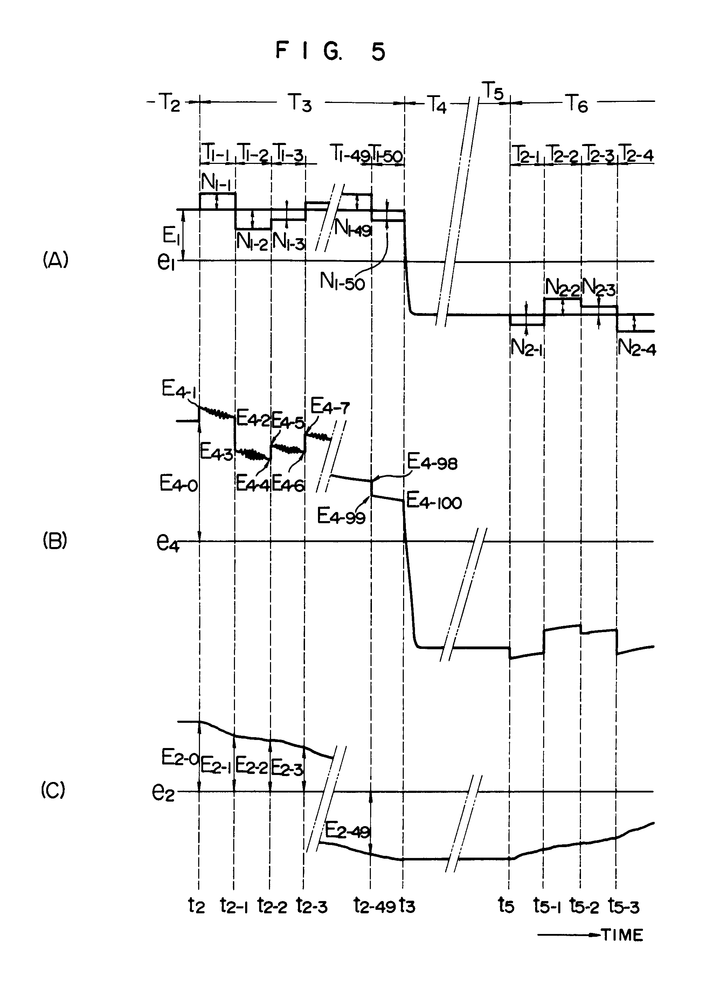

Figs. 5(A) to (C) are enlarged signal waveform diagrams showing in detail parts of Figs. 4(A) to (C) before, during and after the time portions $T_3$ and $T_6$ where noises are superimposed.

Though the output voltage $e_1$ of the differential amplifier 7 has only the effective signal component and therefore takes a value $E_1$ in the time portion $T_2$, the time portion $T_3$ is equally divided into 50 minor time portions $T_{1-1}$, $T_{1-2}$, $T_{1-3}$, ... and $T_{1-50}$ and a pulse-like noise is superimposed in each of the minor time portions. That is to say, assume now that a noise is superimposed on the value $E_1$ of the output voltage of the differential amplifier 7 in the minor time period $T_{1-1}$ with the level of the noise kept constant at its peak value $N_{1-1}$ of positive polarity, and a noise is superimposed on the value $E_1$ in the next minor time portion $T_{1-2}$ with the level of the noise kept constant at its peak value $N_{1-2}$ of negative polarity. Similarly, noises $N_{1-3}$, $N_{1-4}$, ... and $N_{1-50}$ each having a level kept constant during its respective minor time portion are superimposed on the value $E_1$ in the subsequent minor time portions $T_{1-3}$, $T_{1-4}$, ... and $T_{1-50}$, respectively.

Similarly to the time portion $T_3$ in Fig. 5, the time portion $T_6$ is also equally divided into 50 minor time portions $T_{2-1}$, $T_{2-2}$, $T_{2-3}$, ... and $T_{2-50}$. Thus the 50 minor time portions $T_{1-1}$, $T_{1-2}$, $T_{1-3}$, ... and $T_{1-50}$ in the time portion $T_3$ are replaced by the 50 minor time portions $T_{2-1}$, $T_{2-2}$, $T_{2-3}$, ... and $T_{2-50}$ in the time portion $T_6$ respectively, and the respective peak values $N_{1-1}$, $N_{1-2}$, ... and $N_{1-50}$ of the noises superimposed in the minor time portions in the time portion $T_3$ are replaced by the respective peak values $N_{2-1}$, $N_{2-2}$, ... and $N_{2-50}$ in the time portion $T_6$.

Thus, the time portions $T_1$ to $T_6$ constitute a compensation cycle of one period TM.

Similarly, the time portions $T_3{}'$ and $T_6{}'$ are equally divided into 50 minor time portions $T_{3-1}$, $T_{3-2}$, $T_{3-3}$, ... and $T_{3-50}$ and 50 minor time portions $T_{4-1}$, $T_{4-2}$, $T_{4-3}$, ... and $T_{4-50}$, respectively, and it is assumed that the respective peak values of the noises being superimposed in those minor time portions and varying at random are $N_{3-1}$, $N_{3-2}$, $N_{3-3}$, ... and $N_{3-50}$ and $N_{4-1}$, $N_{4-2}$, $N_{4-3}$, ... and $N_{4-50}$, respectively. The time portions $T_1{}'$ to $T_6{}'$ constitute another compensation cycle of one period TM.

In this simulation, 50 compensation cycles each having one period TM are considered. Accordingly, there are 50 x 50 x 2 = 5000 minor time portions as a whole and all the 5000 minor time portions are made equal in time width.

On the other hand, the number of noises superimposed in the minor time portions are 5000, and the respective peak values of the 5000 noises are $N_{1-1}$, $N_{1-2}$, $N_{1-3}$, ... and $N_{1-50}$; $N_{2-1}$, $N_{2-2}$, $N_{2-3}$, ... and $N_{2-50}$; ... ; and $N_{100-1}$, $N_{100-2}$, $N_{100-3}$, ... and $N_{100-50}$ which are obtained by sampling the variations caused in the output voltage $e_1$ of the differential amplifier 7, 50 times in each of 100 time portions corresponding to the 100 time portions $T_3$, $T_6$, $T_3{}'$, $T_6{}'$, and so on.

More specifically, each compensation time interval, that is to say, each of the 100 time portions $T_3$, $T_6$, $T_3{}'$, $T_6{}'$, and so on, is set to 10 msec, and therefore each of the minor time portions is 0.2 msec.

Thus, the output voltage of the differential amplifier 7 which varies at random due to superimposition of noises is normalized at every 0.2 msec over 10 msec to thereby obtain 5000 pieces of data which are used as a set of noise data for the simulation. Accordingly, the result of the simulation can be regarded as being the same as the operation in an actual electronic circuit.

The method of the foregoing simulation will be described hereunder.

In Figs. 5(A) to (C), though the output voltage $e_1$ of the differential amplifier 7 becomes $(E_1 + N_{1-1})$ at the point in time $t_2$ because a noise is superimposed immediately after the switch S1 is turned on at the point in time $t_2$, the output voltage $e_2$ of the integrating circuit 15 does not change instantaneously and is kept as it is at a value $E_{2-0}$, and the value $E_4$ of the output voltage $e_4$ of the amplifier 9 becomes:

$$E4\text{-}1 = A^\bullet(E_1 + N_{1-1} + E_{2-0}) \qquad (23)$$

The integrating circuit 15 integrates the output voltage of the amplifier 9 with the time constant C1 × R1, and the value $E_{2-1}$ of the output voltage $e_2$ of the integrating circuit 15 at the point in time $t_{2-1}$ becomesas follows.

$$E_{2-1} = E_{2-0}{}^\bullet X_a - (E_1 + N_{1-1})^\bullet(1 - X_a) \qquad (24)$$

in which:

$$X_a = e^{-(A/C1 \cdot R1) \cdot T_a} \qquad \ldots (25)$$

Equation (25) is the same as equation (2) except that the integration time is changed from $T_3$ to $T_a$.

At the point in time $t_{2-1}$ where the output of the integrating circuit 15 has changed from the value $E_2\text{-}0$ to $E_{2-1}$, the value $E_{4-2}$ of the output voltage $e_4$ of the amplifier 9 becomes:

$$E_{4-2} = A^\bullet(E_1 + N_{1-1} + E_{2-1}) \qquad (26)$$

9

Even if the peak value of noise changes instantaneously from $N_{1-1}$ to $N_{1-2}$ at this point in time $t_{2-1}$, the output voltage $e_2$ of the integrating circuit 15 does not change but remains as it is at the value $E_{2-1}$.

Accordingly, the value $E_{4-3}$ of the output voltage $e_4$ of the amplifier 9 is obtained from the value $E_{4-2}$ by replacing the value $N_{1-1}$ by $N_{1-2}$ in equation (26) as follows:

$$E_{4-3} = A^{\bullet}(E_1 + N_{1-1} + E_{2-1}) \qquad (27)$$

It should be noted that the peak value of noise N1-2 in the equation (27) is a negative one, as seen in Fig. 5.

The integrating circuit 15 integrates the output voltage of the amplifier 9 in the next minor time portion $T_{1-2}$, and the value $E_{2-2}$ of the output voltage $e_2$ of the integrating circuit 15 at the point in time $t_{2-2}{}'$ becomes:

$$E_{2-2} = E_{2-1}{}^{\bullet}X_a - (E_1 + N_{1-2})^{\bullet}(1 - X_a) \qquad (28)$$

Because of the change of the value of the output voltage $e_2$ of the integrating circuit 15 at the point in time $t_{2-2}$, the value $E_{4-4}$ of the output voltage $e_4$ of the amplifier 9 becomes:

$$E_{4-4} = A^{\bullet}(E_1 + N_{1-2} + E_{2-2}) \qquad (29)$$

By calculating the influence of noises in every minor time portion in the same manner as described above, it is possible to obtain the output value $E_4(t_4)$ at the point in time $t_4$ where no noise exists after the polarity of the excitation current is reversed (see Fig. 4).

This method is the same as that described above in which the influence of a single pulse-like noise is analyzed. The value $E_4(t_4)$ has an error due to noise superimposed in the time portion $T_3$.

Through quite the same process as that described above, it is possible to obtain the value $E_4(t_1{}')$ in the first half of the next compensation cycle TM$'$ which is affected by the noises $N_{2-1}$, $N_{2-2}$, $N_{2-3}$, ... and $N_{2-50}$ superimposed in the time portion $T_6$.

In the same manner, it is possible to obtain 100 outputs in total over all the 50 compensation periods by obtaining the output affected by noises in each of the first and second halves of every compensation period.

All the 50 noises superimposed in each of the 100 time portions $T_3$, $T_6$, $T_3{}'$, $T_6{}'$ ... are different in pattern from one another, and therefore all the output voltages affected by those noises in the respective half periods are different from one another.

Though being complex at a glance, the foregoing calculation can be very easily executed by means of a computer if the process of calculation is programmed.

Of the 100 output voltages thus obtained, the 50 output voltages in the respective first half periods of the 50 compensation periods were used as they are and the remaining 50 output voltages in the respective second half periods of the 50 compensation periods were used after being multiplied by -1 so that they were reversed in sign. This is necessary to make the processing equivalent to that executed by means of the sampling and holding circuits 10 and 11 and the subtracting circuit 12 of Fig. 1. Because the 100 output voltages thus obtained in the respective half periods of the 50 compensation cycles varied from one another, the standard deviation $\sigma$ of the variations was used to represent the degree of influence of the noises.

Fig. 10 shows the degree of influence, with the ordinate representing the standard deviation $1\sigma$ of the variations and the abscissa representing the value of X expressed by equation (2). Fig. 10 shows the fact that as the value of X decreases the variation of the output of the compensation loop caused by the given noise tends to increase.

Though the amplification degree of the closed loop adjusting circuit 16 represented by the equation (9) changes as the value of X changes, this change in the amplification degree of the closed loop adjusting circuit 16 has been corrected for in Fig. 10. Accordingly, Fig. 10 shows the state of change in the variations of the output when the value of X is changed under the condition of fixed amplification degree. The noises used in the simulation were the 5000 outputs obtained by sampling the variations in the output voltage of the differential amplifier 7 in the conditions of use which are an object of the present invention, and the 5000 data were used as a set of noise model in all the simulations for the values of X in the range of from 0.6 to $1 \times 10^{-15}$. In the simulation, noises were superimposed only in the time portions $T_3$, $T_6$ ... in which the switch S1 was turned on, and no noise was superimposed in the time portions $T_2$, $T_5$ ... in which the switch S2 or S3 was turned on so that the flow signal was stored.

From the three points of view, Fig. 10 shows the influence given to the closed loop adjusting circuit 16 purely by the random noise model of a constant level when the value of X is changed.

As described above in each of the two simulations, of the cases where a single pulse-like noise is superimposed and where random noises are superimposed, respectively, the influence of the noise on the output of the closed loop adjusting circuit 16 becomes large as the value of X becomes small. The influence of noises on the closed loop adjusting circuit 16 causes a large error when a noise is superimposed in the last period in the compensation cycle. This is because an error corresponding to the peak value of the noise is generated since the closed loop adjusting circuit 16 makes compensation to make the output value including the noise zero.

On the other hand, in the case where a single pulse-like noise is superimposed in the first half period of the compensation cycle, the influence of the noise is less.

In this point of view, the possibility that large noises are superimposed in the last period of a compensation cycle and the possibility that large noises are superimposed in the other portions of the compensation cycle are equal to each other for periods of the same time width, and therefore the influence of the noises varying at random is considered such that each compensation cycle has a first period in which the output of the closed loop adjusting circuit 16 is largely affected by noises and another half period in which the output of the closed loop adjusting circuit 16 is less affected by noises so that variations are generated in the output.

Being caused by the influence of noises varying at random, the variations in the output of the closed loop adjusting circuit 16 have normal distribution centering around a correct output value (that obtained when no noise is present). Accordingly, even if there is influence of noises, the mean value over a long time shows a correct value of measurement. However, it is desirable to be able to carry out the flow measurement in the shortest possible time. If the compensation in each compensation cycle is made to be about 60% to 10% of the value before compensation, that is, if the value of X is made to 0.6 to 0.1, it is possible to make the variations caused in the output small even when there occur noises and therefore it is possible to carry out flow measurement to a given accuracy in a short time.

Referring to fig. 7, a second form of apparatus according to the invention is largely the same in operation as that shown in Fig. 1, and only the portions different from the latter will be described.

A switch S1 is turned on at the same timing as the switch S1 of Fig. 1, so that an output voltage $e_4$ of an amplifier 9 is integrated with a time constant $C2 \times R6$ and an output of an output voltage of $e_2$ of an impedance converter 17 connected to a junction between a resistor R6 and a capacitor C6 is applied as a compensation voltage to a minus input of a subtracting circuit 18.

In the apparatus shown in Fig. 1, the integrating circuit 15 is of the invertor type in which the output $e_2$ thereof is reversed in phase relative to its input, and therefore the output $e_2$ is applied to the adding circuit 8. In the apparatus shown in Fig. 7, on the other hand, the impedance converter 17 is of the non-inverting type, and the output $e_2$ thereof is connected to the subtracting circuit 18 so as to constitute a closed loop adjustment circuit for actuating the compensation function. Thus, the circuit shown in Fig. 7 has a function equivalent to that of the corresponding part of the circuit shown in Fig. 1.

Thus, according to the present invention, in amplifying a signal including a large noise, it is possible to make compensation which is hardly affected by noises varying at random included in a trouble voltage while at least partially eliminating any DC offset generated by a differenttial amplifier and an AC amplifier at the next stage.

Further, since the differential amplifier 7 is connected through an electrode and a capacitor so that any DC trouble voltage generated in the electrodes is blocked, the differential amplifier 7 is not saturated and the amplification degree of the amplifier 7 can be made large to an extent that it is limited by its own offset. Thus, the invention is applicable to an electromagnetic flowmeter of the low power consumption type.

**Claims**

1. A method of compensating for DC offset voltages in an electromagnetic flowmeter, comprising generating a DC magnetic field having a periodically reversed polarity, sampling and storing a signal voltage produced across a pair of electrodes provided on a tube through which, in use, an electrically conductive fluid flows across the magnetic field, in each of a pair of sampling periods when the magnetic field takes a positive polarity and a negative polarity, respectively, and forming a difference between the sampling values as an output voltage, sampling the signal voltage in a compensation period following each said sampling period to produce a compensation voltage, storing the compensation voltage from one compensation period to the next, and superimposing the compensation voltage onto the signal voltage prior to sampling it, in order to compensate at least partially for DC offset voltages, characterised in that the step of sampling the compensated signal voltage is carried out with a time constant such that over the length of the compensation period the compensated signal voltage is reduced to a value in the range of from 10% to 60% of its value at the beginning of the compensation period.

2. A method as claimed in claim 1, wherein compensation is effected by means of an integrating circuit including an operational amplifier.

3. A method as claimed in claim 1, wherein compensation is effected by means of an impedance converter.

4. An electromagnetic flowmeter, comprising means for generating a DC magnetic field having a periodically reversed polarity, a pair of electrodes that are arranged to be provided on a tube through which, in use, an electrically conductive fluid flows across the magnetic field, means arranged in use to sample and store a signal voltage produced across the electrodes in each of a pair of sampling periods when the magnetic field takes a positive polarity and a negative polarity, respectively, and to form a difference between the sampling values as an output voltage, a closed loop adjusting circuit arranged in use to sample the signal voltage in a compensation period following each said sampling period to produce a compensation voltage, to store the compensation voltage from one compensation period to the next, and to superimpose the compensation voltage onto the signal voltage prior to sampling it, in order to compensate at least partially for DC offset voltages, characterised in that the adjusting circuit carries out the sampling of the signal voltage with a time constant such that over a compensation period of predetermined length the compensated signal voltage is reduced to a value in the range of from 10% to 60% of its value at the beginning of the compensation period.

5. A flowmeter as claimed in claim 4, comprising a differential amplifier to which said pair of electrodes are connected through respective capacitors; a subtracter having two inputs one of which is connected to an output of said differential amplifier; and an amplifier having an input connected to an output of said subtracter; and wherein the adjusting circuit comprises a cascade connection of a CR integration type time constant circuit and an impedance converter, and a switch inserted between said amplifier and said time constant circuit for sampling said signal voltage in said sampling period; said impedance converter having an output for generating said compensation voltage, said output being connected to the other, subtraction, input of said subtracter.

6. Apparatus as claimed in claim 4, comprising a differential amplifier to which the pair of electrodes are connected through respective capacitors; an adder having two inputs one of which is connected to an output of the differerential amplifier; and an amplifier having an input connected to an output of the adder; and wherein the adjusting circuit comprises a cascade connection of an integration circuit composed of a resistor and a capacitor and an operational amplifier, and a switch inserted between the amplifier and the integration circuit for sampling the signal voltage in the sampling period, the integration circuit having an output for generating the compensation voltage, the output being connected to the other input of the adder.

**Patentansprüche**

1. Verfahren zum Kompensieren von Gleichstrom-Verlagerungsspannungen in einem elektromagnetischen Strömungsmesser, umfassend das Erzeugen eines Gleichstrom-Magnetfelds, das eine periodisch entgegengesetzte Polarität hat, Abtasten und Speichern einer Signalspannung, welche über einem Paar Elektroden, die auf einem Rohr vorgesehen sind, durch welches im Gebrauch ein elektrisch leitfähiges Fluid quer zu dem Magnetfeld strömt, erzeugt wird, in jeder von einem Paar von Abtastperioden, wenn das Magnetfeld eine positive Polarität bzw. eine negative Polarität annimmt, und Bilden einer Differenz zwischen den Abtastwerten als eine Ausgangsspannung, Abtasten der Signalspannung in einer Kompensationsperiode, die jeder der Abtastperioden folgt, um eine Kompensationsspannung zu erzeugen, Speichern der Kompensationsspannung von einer Kompensationsperiode zu der nächsten, und Überlagern der Kompensationsspannung auf die Signalspannung vor dem Abtasten derselben, um wenigstens teilweise Gleichstrom-Verlagerungsspannungen zu kompensieren, dadurch **gekennzeichnet,** daß der Schritt des Abtastens der kompensierten Signalspannung mit einer derartigen Zeitkonstante ausgeführt wird, daß über die Länge der Kompensationsperiode die kompensierte Signalspannung auf einen Wert in dem Bereich von von 10 % bis 60 % ihres Werts am Beginn der Kompensationsperiode reduziert wird.

**2.** Verfahren nach Anspruch 1, worin die Kompensation mittels einer Integrationsschaltung bewirkt wird, die einen Operationsverstärker aufweist.

**3.** Verfahren nach Anspruch 1, worin die Kompensation mittels eines Impedanzwandlers bewirkt wird.

**4.** Elektromagnetischer Strömungsmesser, umfassend eine Einrichtung zum Erzeugen eines Gleichstrom-Magnetfelds, das eine periodisch entgegengesetzte Polarität hat, ein Paar Elektroden, die so angeordnet sind, daß sie auf einem Rohr vorgesehen sind, durch welches im Gebrauch ein elektrisch leitfähiges Fluid quer zu dem Magnetfeld strömt, eine Einrichtung, die im Gebrauch so angeordnet ist, daß sie eine Signalspannung abtastet und speichert, welche über den Elektroden in jeder von einem Paar von Abtastperioden erzeugt wird, wenn das Magnetfeld eine positive Polarität bzw. eine negative Polarität annimmt, und zum Bilden einer Differenz zwischen den Abtastwerten als eine Ausgangsspannung, eine geschlossenschleifige Einstellschaltung, die im Gebrauch so angeordnet ist, daß sie die Signalspannung in einer Kompensationsperiode, welche jeder Abtastperiode folgt, zum Erzeugen einer Kompensationsspannung abtastet, die Kompensationsspannung von einer Kompensationsperiode zu der nächsten speichert, und die Kompensationsspannung auf die Signalspannung vor dem Abtasten derselben überlagert, um Gleichstrom-Verlagerungsspannungen wenigstens teilweise zu kompensieren, dadurch **gekennzeichnet,** daß die Einstellschaltung das Abtasten der Signalspannung mit einer Zeitkonstante derart ausführt, daß über eine Kompensationsperiode von vorbestimmter Länge die kompensierte Signalspannung auf einen Wert in dem Bereich von von 10 % bis 60 % ihres Werts am Beginn der Kompensationsperiode reduziert wird.

**5.** Strömungsmesser nach Anspruch 4, umfassend einen Differentialverstärker, mit dem das Paar Elektroden durch jeweilige Kondensatoren verbunden ist; einen Subtrahierer, der zwei Eingänge hat, von denen einer mit einem Ausgang des Differentialverstärkers verbunden ist; und einen Verstärker, der einen Eingang hat, welcher mit einem Ausgang des Subtrahierers verbunden ist; und worin die Einstellschaltung eine Kaskadenverbindung einer CR-Zeitkonstantenschaltung vom Integrationstyp und eines Impedanzwandlers umfaßt, und einen Schalter, welcher zwischen den Verstärker und die Zeitkonstantenschaltung zum Abtasten der Signalspannung in der Abtastperiode eingefügt ist; wobei der Impedanzwandler einen Ausgang zum Erzeugen der Kompensationsspannung hat, wobei der besagte Ausgang mit dem anderen, Subtraktions-Eingang des Subtrahierers verbunden ist.

**6.** Einrichtung nach Anspruch 4, umfassend einen Differentialverstärker, mit dem das Paar Elektroden durch jeweilige Kondensatoren verbunden ist; einen Addierer, der zwei Eingänge hat, von denen einer mit einem Ausgang des Differentialverstärkers verbunden ist; und einen Verstärker, der einen Eingang hat, welcher mit einem Ausgang des Addierers verbunden ist; und worin die Einstellschaltung eine Kaskadenverbindung einer Integrationsschaltung umfaßt, die aus einem Widerstand und einem Kondensator und einem Operationsverstärker zusammengesetzt ist, und einen Schalter, der zwischen den Verstärker und die Integrationsschaltung zum Abtasten der Signalspannung in der Abtastperiode eingefügt ist, wobei die Integrationsschaltung einen Ausgang zum Erzeugen der Kompensationsspannung hat, wobei der Ausgang mit dem anderen Eingang des Addierers verbunden ist.

**Revendications**

**1.** Procédé pour compenser les tensions continues perturbatrices dans un débitmètre électromagnétique, consistant à générer un champ magnétique continu ayant une polarité périodiquement inversée, à échantillonner et mémoriser une tension de signal produite entre deux électrodes fournies sur un tube par lequel passe, en fonctionnement, un fluide électriquement conducteur dans le champ magnétique, pendant chacune d'une paire de périodes d'échantillonnage où le champ magnétique prend une polarité positive et une polarité négative, respectivement, et à former la différence entre les valeurs d'échantillonnage comme tension de sortie, échantillonner la tension de signal pendant une période de compensation à la suite de chaquedite période d'échantillonnage pour produire une tension de compensation, mémoriser la tension de compensation d'une période de compensation à la suivante, et superposer la tension de compensation à la tension de signal avant de l'échantillonner afin de compenser au moins partiellement les tensions continues perturbatrices, caractérisé en ce que l'étape d'échantillonnage de la tension de signal compensée est exécutée avec une constante de temps telle

EP 0 294 924 B1

que sur toute la période de compensation, la tension de signal compensée est réduite à une valeur comprise entre 10% et 60% de sa valeur au début de la période de compensation.

2. Procédé selon la revendication 1, dans lequel une compensation est exécutée au moyen d'un circuit d'intégration incluant un amplificateur opérationnel.

3. Procédé selon la revendication 1, dans lequel une compensation est exécutée au moyen d'un convertisseur d'impédance.

4. Débitmètre électromagnétique, comprenant un moyen pour générer un champ magnétique continu ayant une polarité périodiquement inversée, deux électrodes qui sont disposées pour être fournies sur un tube par lequel passe, en fonctionnement, un fluide électriquement conducteur dans le champ magnétique, un moyen agencé en fonctionnement pour échantillonner et mémoriser une tension de signal produite entre les électrodes pendant chacune d'une paire de périodes d'échantillonnage quand le champ magnétique prend une polarité positive et une polarité négative, respectivement, et pour former la différence entre les valeurs d'échantillonnage comme tension de sortie, un circuit de réglage à boucle fermée agencé en fonctionnement pour échantillonner la tension de signal pendant une période de compensation à la suite de chaquedite période d'échantillonnage pour produire une tension de compensation, pour mémoriser la tension de compensation d'une période de compensation à la suivante, et pour superposer la tension de compensation à la tension de signal avant de l'échantillonner, afin de compenser au moins partiellement les tensions continues perturbatrices, caractérisé en ce que le circuit de réglage exécute l'échantillonnage de la tension de signal avec une constante de temps telle que sur une période de compensation d'une longueur prédéterminée, la tension de signal compensée est réduite à une valeur comprise entre 10% et 60% de sa valeur au début de la période de compensation.

5. Débitmètre selon la revendication 4, comprenant un amplificateur différentiel auquel sont connectées lesdites deux électrodes par l'intermédiaire de condensateurs respectifs; un soustracteur ayant deux entrées dont une est connectée à une sortie dudit amplificateur différentiel; et un amplificateur ayant une entrée connectée à une sortie dudit soustracteur; et dans lequel le circuit de réglage comprend une connexion en cascade d'un circuit à constante de temps du type à intégration CR et d'un convertisseur d'impédance, et un commutateur inséré entre ledit amplificateur et ledit circuit à constante de temps pour échantillonner ladite tension de signal pendant ladite période d'échantillonnage; ledit convertisseur d'impédance ayant une sortie pour générer ladite tension de compensation, ladite sortie étant connectée à l'autre entrée de soustraction dudit soustracteur.

6. Dispositif selon la revendication 4, comprenant un amplificateur différentiel auquel les deux électrodes sont connectées par l'intermédiaire de condensateurs respectifs; un additionneur ayant deux entrées dont une est connectée à une sortie de l'amplificateur différentiel; et un amplificateur ayant une entrée connectée à une sortie de l'additionneur; et dans lequel le circuit de réglage comprend une connexion en cascade d'un circuit d'intégration constitué d'une résistance et d'un condensateur et d'un amplificateur opérationnel, et un commutateur inséré entre l'amplificateur et le circuit d'intégration pour échantillonner la tension de signal pendant la période d'échantillonnage, le circuit d'intégration ayant une sortie pour générer la tension de compensation, la sortie étant connectée à l'autre entrée de l'additionneur.

14

# F I G. 1

# F I G. 3

F I G. 2

# F I G. 4

# F I G. 6

F I G. 5

# F I G. 7

# F I G. 8

F I G. 9

$T_{X3} = 0mS$

$T_{X3} = 0.2mS$

K

$10^{-6}$   $10^{-5}$   $10^{-4}$   0.001   0.01   0.1   0.6

$$X = \mathcal{E} - \frac{A}{C_1 \cdot R_1} \cdot T_3$$

F I G. 10

$\sigma$

$10^{-15}$   $10^{-13}$   $10^{-11}$   $10^{-9}$   $10^{-7}$   $10^{-5}$   0.001   0.1
$10^{-14}$   $10^{-12}$   $10^{-10}$   $10^{-8}$   $10^{-6}$   $10^{-4}$   0.01   0.6

$$X = \mathcal{E} - \frac{A}{C_1 \cdot R_1} \cdot T$$

20